# EUROPÄISCHE PATENTANMELDUNG

(11) **EP 0 902 038 A1**
(43) Veröffentlichungstag der Anmeldung: **17.03.1999**
(21) Anmeldenummer: 98890258.1
(22) Anmeldetag: 07.09.1998
(51) Int. Cl.: C08F 8/28

(54) **Verwendung von biologisch abbaubaren, geschäumten Polymeren als Verpackungsmaterialien**

(30) Priorität: 10.09.1997 AT 1523/97
(71) Anmelder: Petruzalek Gesellschaft M.B.H., 2331 Vösendorf (AT)
(72) Erfinder: Haschke, Heinz Dr., 2542 Kottingbrunn (AT)
(74) Vertreter: Dungler, Karin

(57) **Zusammenfassung**

Die Erfindung betrifft die Verwendung von biologisch abbaubaren, geschäumten Polymeren für Verpackungsmaterialien. Dabei besteht das verwendete Polymer aus einem wasserlöslichen Polyvinylacetal ist, welches durch säurekatalysierte Acetalisierungsreaktion von Polyvinylalkohol mit einem Verseifungsgrad von 80 - 99,5 Mol% mit Stärke oder deren Derivaten hergestellt ist.

Ferner werden Verpackungen A wie Transportunterlagen für Speisen in Form von Tassen 1 angegeben, die aus diesem biologisch abbaubaren, geschäumten Polymer bestehen.

## Beschreibung

### Technisches Gebiet

Die Erfindung betrifft die Verwendung von biologisch abbaubaren, geschäumten Polymeren als Verpackungsmaterialien sowie eine Verpackung bestehend aus derartigen Verpackungsmaterialien.

### Stand der Technik

Es ist bekannt, Packgüter wie Lebensmittel, Fertiggerichte, aber auch technische Materialien wie Schrauben in Verpackungen zu präsentieren, welche aus einer Tasse und einer Abdeckhülle bestehen. Die Tassen bestehen beispielsweise aus geschäumtem Polystyrol und sind zum Schutz des Packgutes mit einer Klarsichtfolie aus Cellophan, Polypropylen (PP), insbesondere biaxial orientiertem PP-Film, PVC-Film oder Polyvinylchlorid (PVC) abgedeckt oder umhüllt.

Die vorgenannten Tassen werden auch zum kurzfristigen Transport von Fertiggerichten (fast food) sowie für die Ausgabe von Schnellgerichten an Imbiss-Stationen auf Straßen oder in Verkehrsmitteln wie Eisenbahnzügen (travel-trays) verwendet .

Diese Tassen sind nur für den kurzzeitigen "Einmal-Gebrauch" bestimmt und werden in der Regel unmittelbar nach Gebrauch (Verbrauch) des Packgutes weggeworfen. Dadurch entsteht ein wesentliches Entsorgungsproblem, das durch die Auswahl des Verpackungsmaterials verursacht wird. So sind beispielsweise Tassen aus geschäumtem Polystyrol weder wasserlöslich noch biologisch abbaubar. Ein besonderes Umweltproblem stellen diese Tassen in der Nähe von Imbißstuben oder Eisenbahnlinien dar, weil sie nach dem Gebrauch als Reiseprovianttassen von den Fahrgästen oft achtlos weggeworfen werden. Da sie nicht verrotten, kumuliert der Abfall derart, daß dieser sogar über Weltraumsatelliten in Form weißer Linien entlang von Eisenbahnlinien erkennbar ist. In Fachkreisen wurde für dieses Umweltproblem bereits der Ausdruck "weiße Umweltverschmutzung" kreiert.

Um hier Abhilfe zu schaffen, wurden anstelle von Polystyrol analoge Tassen aus geschäumter Stärke oder aus Stärke-PVC-Gemischen vorgeschlagen. Da aber auch PVC weder wasserlöslich noch biologisch abbaubar ist, kann das vorgenannte Umweltproblem nicht gelöst werden: Der Stärkeanteil kann zwar unter günstigen Bedingungen - das heißt unter Kompostierungsbedingungen - langsam biologisch abgebaut werden, der PVC-Anteil bleibt aber chemisch unverändert erhalten.

Aber auch Tassen aus reiner, geschäumter Stärke lösen das Umweltproblem nur teilweise. Obzwar Stärke im Prinzip biologisch abbaubar ist, erfolgt dieser Abbau nur dann effizient, wenn Mikroorganismen in Gegenwart von genügend Feuchtigkeit auf das Stärkematerial einwirken können, also in der Regel unter Kompostierungsbedingungen im feuchten Erdreich. Fehlt eine dieser Bedingungen, das heißt entweder ausreichend Feuchtigkeit oder aktive Mikroorganismen, so kann der Stärkeabbau nicht erfolgen. Außerhalb feuchten Erdreichs an der Luft werden Tassen aus Stärkematerial daher nicht oder nur teilweise abgebaut.

Neben diesen unzureichenden Abbaueigenschaften der Stärke für den genannten Anwendungsbereich hat es sich gezeigt, daß aus geschäumter Stärke hergestellte Tassen ähnliche Eigenschaften wie beispielsweise Backwaren aufweisen und daher bei der Anwendung für Verpackungszwecke zu leicht zerbrechen.

Um diesem Mangel unter anderem abzuhelfen, werden gemäß der EP-A-587 078 geschäumte Stärke-Polymer-Mischungen vorgeschlagen, denen, um die mechanische Stabilität der Formteile aus Stärke mittels eines polymeren Bindemittels zu erhöhen, Polyvinylalkohol beigemischt ist.

Stärke und Polyvinylalkohol sind jedoch Polymere, die miteinander nicht mischbar sind, d.h. solche Gemische oder richtiger inhomogene, stofflich uneinheitliche Gemenge sind nicht einphasig. Sie neigen daher zur Entmischung, was sich in solchen Systemen sogar als brüchigkeitserhöhend auswirkt. Als Phasenvermittler werden gemäß der EP-A-587 078 Tenside verwendet, durch deren Zusatz die gewünschte festigkeitserhöhende Wirkung erzielt werden kann.

Es ist jedoch bekannt, daß jeder Zusatz von migrationsfähigen Verbindungen wie auch Tensiden beim Einsatz in der Lebensmittelverpackung den Geschmack des Packgutes negativ beeinträchtigen können.

Ferner sind solche Stärkepolymermischungen im Prinzip zwar abbaubar, aber nur bedingt: Während der Stärkeanteil in solchen Stärke-Polymer-Mischungen zwar langsam dem biologischen Abbau zugänglich ist, wenn die Bedingungen wie Feuchtigkeit und Anwesenheit von Mikrooganismen gewährleistet sind, so erfordert der Abbau der als Bindemittel beigemischten Polyvinylalkohol-Anteile zusätzlich noch die Bedingung, daß Temperaturen von zumindest 18°C sichergestellt sein müssen, andernfalls ein biologischer Abbau nur sehr langsam bis gar nicht erfolgen kann.

In der WO-A-96/03443 hingegen sind Acetale aus Stärke und Polyvinylalkoholen angeführt, welche unter Kompostierungsbedingungen auch bei Temperaturen um 12°C und darunter noch biologisch abbaubar sind.

Aufgabe der Erfindung ist es nun, die Verwendung von biologisch abbaubaren geschäumten Polymeren als Verpackungsmaterialien dahingehend zu verbessern, daß sich das Verpackungsmaterial schon beim bloßen Kontakt mit klimatisch bedingter Feuchte wie Regen- oder Tautropfen zumindestens aufzulösen beginnt und sogar in der Folge gänzlich auflöst. Durch die Wasserlöslichkeit soll ferner gewährleistet sein, daß die Polymere als Lösung in das Erdreich einsickern, sodaß das Verpackungsmaterial einerseits restlos entsorgt und andererseits den Kompostierungsbedingungen zugeführt wird, unter denen es biologisch abgebaut wird.

### Darstellung der Erfindung

Erfindungsgemäß wird die Verwendung eines biologisch abbaubaren, geschäumten Polymeren vorgeschlagen, welches dadurch gekennzeichnet ist, daß das verwendete Polymer ein wasserlösliches Vinylalkoholcopolymer ist, welches durch säurekatalysierte Acetalisierungsreaktion von Polyvinylalkohol mit einem Verseifungsgrad von 80 - 99,5 Mol% mit Stärke oder deren Derivaten herstellbar ist.

Die chemische Konstitution der erfindungsgemäß verwendeten Vinylalkoholcopolymere wird in der WO-A 96/03443 beschrieben. Ferner werden diese enthaltende Zubereitungen in der WO-A 96/35748 angegeben, welche zusätzlich Plastiziser wie Glyzerin enthalten.

Das Aufschäumen der Vinylalkoholcopolymere erfolgt in an sich bekannter Weise in einem Extruder. Da die erfindungsgemäß zu verwendenden Vinylalkoholcopolymere in der Regel einen gewissen Wassergehalt aufweisen, nämlich in Form von Wasser oder Hydratwasser, welches bei ihrer Herstellung mit dem Säurekatalysator und/oder dem Plastiziser eingemischt wurde, und da diese Vinylalkoholcopolymere oberhalb des Siedepunktes von Wasser extrudiert werden, kommt es am Extruderausgang durch die Entspannung auf Atmosphärendruck durch die Wirkung des Wasserdampfes aus diesem Wassergehalt zum Auschäumen des Extrudats.

In der Regel enthalten die erfindungsgemäß zu verwendenden Vinylalkoholcopolymere zwischen 1 und 20 Gew.% Wasser, vorzugsweise zwischen 3 und 10 Gew.%.

Es kann aber auch während der Extrusion beispielsweise ein gasförmiges Schaum-Treibmittel in den Extruder zugeleitet werden wie Propan und/oder Butan. Diese Gase führen beim Extruderausgang und der dort stattfindenden Entspannung auf Atmosphärendruck zum Aufschäumen des Extrudats. Diese Methode wird besonders dann bevorzugt, wenn Vinylalkoholcopolymere verwendet werden, die einen sehr geringen Wassergehalt, d.h. 0 - 3 Gew.% aufweisen.

Ein weiterer Vorteil der erfindungsgemäßen Verwendung besteht darin, daß das verwendete Vinylalkoholcopolymer aus 50 - 95 Gewichtsteilen Polyvinylalkohol mit einem mittleren Polymerisationsgrad von 300 - 3000 herstellbar ist.

Das verwendete Vinylalkoholcopolymer kann erfindungsgemäß ferner aus 50 - 65 Gewichtsteilen Polyvinylalkohol hergestellt werden, wobei der eingesetzte Polyvinylalkohol einen Polymerisationsgrad von 280 - 1500 (im Gewichtsmittel) und einen Verseifungsgrad von 83 - 90 Mol% aufweist.

Ein weiterer Vorteil der Erfindung besteht darin, daß das verwendete Vinylalkoholcopolymer Stärkederivate enthält, welche durch sauren oder schwach oxidativen Abbau hergestellt sind.

Erfindungsgemäß sind an den Stärkederivaten im verwendeten Vinylalkoholcopolymer bis zu 20 % ihrer C₆-Einheiten äthoxiliert oder propoxyliert. Bevorzugt ist ein Äthoxilierungs- und/oder Propoxylierungsgrad von nicht mehr als 15%, besondere bevorzugt im Bereich von 1% bis 10%, bezogen auf die vorhandenen C₆-Einheiten.

Ferner kann das erfindungsgemäß verwendete Vinylalkoholcopolymer Zusatzstoffe enthalten, welche Plastifizierungsmittel, vorzugsweise Glyzerin, sind.

Die Erfindung betrifft ferner eine Verpackung, die aus einer Tasse und einem mit dieser verbundenen Abdeckelement, besteht, welche unter Verwendung eines biologisch abbaubaren, geschäumten Polymeren gemäß oben beschriebener erfindungsgemäßer Verwendung herstellbar ist.

Diese Verpackung weist erfindungsgemäß den Vorteil auf, daß das Abdeckelement ein Deckel oder eine Folie vorzugsweise aus biologisch abbaubarem Material ist.

Ein weiterer Vorteil der erfindungsgemäßen Verpackung liegt darin, daß zum Verpacken von Packgütern mit Eigenfeuchte an der dem Packgut zugewandten Seite der Tasse eine wasserbeständige Barriereschicht vorliegt.

Erfindungsgemäß kann die wasserbeständige Barriereschicht aus einer Folie bestehen.

Folgende biologisch abbaubare Folien kommen in Frage: Folien aus poly-ε-caprolacton (sogenanntes PCL), aus PCL-Stärkegemischen, Polyhydroxybutyrat, Polyhydroxyvalerat, Polymilchsäure, aber auch Folien aus biologisch abbaubaren, wasserlöslichen Materialien, wie in der WO-A-96/35748 geoffenbart, wenn sie selbst wieder auf der dem Packgut zugewandten Seite wasserunlöslich ausgerüstet sind.

Ein weiterer Vorteil der erfindungsgemäßen Verpackung besteht darin, daß die wasserbeständige Barriereschicht aus einem hydrophoben Beschichtungssystem besteht.

Als hydrophobe Beschichtungssysteme eignen sich Lacke, beispielsweise Nitrocelluloselacke, Acrylatlacke, Polyurethanlacke oder Polyester-Beschichtungen. Diese werden in Abhängigkeit von ihrer Wasser-Barrierewirkung entsprechend aufgetragen, beispielsweise durch Lackieren, Pulverbeschichtung oder Koextrusion- oder Dünnfilm-Auflaminierung, sodaß ihre Schichtstärke derart eingestellt ist, daß die darunterliegende Tasse vor dem Feuchtigkeitsgehalt des Packgutes ausreichend geschützt ist.

Die Tasse der erfindungsgemäßen Verpackung wird in an sich bekannter Weise beispielsweise durch Tiefziehen hergestellt.

Die Aufkaschierung einer Schutzfolie als Abdeckelement für die Tasse erfolgt derart, daß diese vor dem Tiefziehgang des geschäumten Tassenmaterials auf dieses warm aufgewalzt (auflaminiert) wird und dabei allein durch Adhäsion haftet.

Die Kaschierung kann aber auch so erfolgen, daß die Folie auf dem geschäumten Tassenmaterial mittels einer dünnen Kleberschicht fixiert wird. Dabei sollte dieser Kleber vorzugsweise wieder biologisch abbaubar sein.

Die Verbindung zwischen Folie und Tasse kann auch so erfolgen, daß die Folie in eine Spritzgußform eingelegt wird und darüber das Verpackungsmaterial zur Bildung der Tasse unter Schäumen als heiße Schmelze eingespritzt wird.

Zur besseren Transport fähigkeit der Packgüter kann das Abdeckelement die Tasse auch vollständig umhüllen. Dies kann beispielsweise in Form einer Folie in Kombination mit einem schachtelartigen Deckel erfolgen, wobei biologisch abbaubare Materialien gemäß erfindungsgemäßer Verwendung bevorzugt sind.

Die Erfindung betrifft ferner eine Transportunterlage für Speisen, welche dadurch gekennzeichnet ist, daß die Tasse unter Verwendung eines biologisch abbaubaren, geschäumten Polymeren gemäß Erfindung herstellbar ist.

Diese Tasse weist ferner den Vorteil auf, daß zum Transport von Packgütern mit Eigenfeuchte an der dem Packgut zugewandten Seite der Tasse eine wasserbeständige Barriereschicht vorliegt, wobei die wasserbeständige Barriereschicht eine Folie oder ein hydrophobes Beschichtungssystem ist.

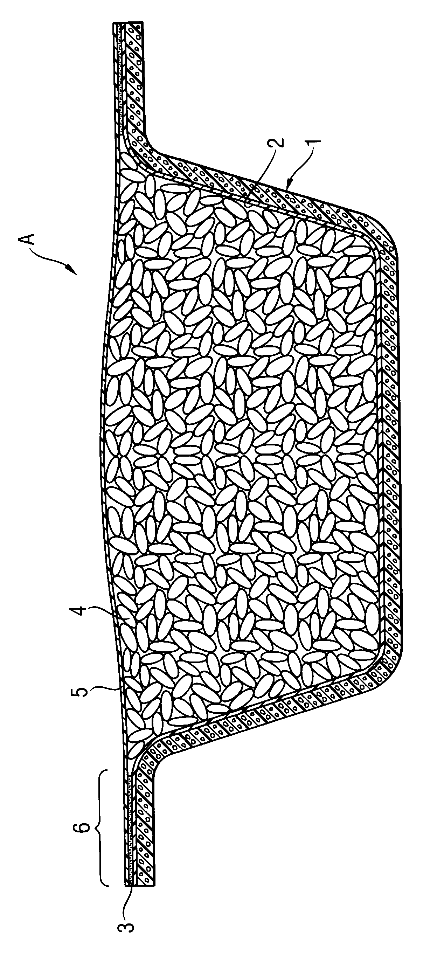

### Beschreibung der Zeichnung, mehrere Wege zur Ausführung der Erfindung sowie deren gewerbliche Anwendbarkeit

Die Erfindung wird nunmehr anhand einer Zeichnung näher erläutert.

Darin wird die erfindungsgemäße Verpackung A für das Packgut 4 gezeigt, welche eine Tasse 1 beinhaltet. Für Packgut mit Eigenfeuchte wird fakultativ die Schutzfolie 2 mit Barrierewirkung gegen Wasser und Wasserdampf vorgesehen. In der Ausführungsform als geschlossene Transportverpackung wird die Abdeckfolie 5 vorgesehen. Diese kann am Tassenrand 6 mittels eines peelfähigen Klebers 3 aufgesiegelt sein.

Die Erfindung wird ferner anhand von Beispielen erläutert:

### Beispiel 1:

60 kg eines Stärkederivates, hergestellt aus schwach oxidativ abgebauter Kartoffelstärke mit 10% an propoxylierten C6-Einheiten und einem mittleren Molekulargewicht von 200.000 werden pro Stunde in einem Zweischnecken-Extruder mit 40 kg Polyvinylalkohol mit einem mittleren Molekulargewicht (Gewichtsmittel) von 1500 und einem Verseifungsgrad von 88 Mol-% in Gegenwart von 5 Gew-% (bezogen auf die Gesamtmenge Stärkederivat und PVAL) Glycerin und einem üblichen sauren Acetalisierungskatalysator zu einem PVAL-Stärkederivat-Acetal umgesetzt. Der Umsatz erfolgt laut ¹³C-NMR-Analyse mit 83% d.Theorie. Das Reaktionsprodukt wird als Strang aus dem Extruder ausgetragen und noch in heißem Zustand granuliert. Das so hergestellte Granulat wird in einem weiteren Verfahrensschritt einem Einschnecken-Extruder mit Breitschlitzdüse zugeführt, in welchem unter Druck Flüssiggas wie beispielsweise Butan zugeleitet wird. Durch das Verdampfen des Flüssiggases beim Düsenaustritt schäumt das Extrudat unter Bildung eines ca. 4 mm dicken Flachbandes auf.

Das geschäumte Flachband wird auf Rollen gelagert und anschliessend in Tafeln von 50 cm x 1 m geschnitten. Aus diesen Tafeln werden in einer Tiefziehanlage je 3 Reihen à 4 Tassen 1 von je 15 x 20 cm und einer Tiefe von 2,5 cm tiefgezogen und sogleich ausgestanzt.

Die Tassen 1 sind als Verpackungsuntersatz für die Verpackung von Kleinteilen wie Schrauben geeignet. Nach Einfüllen des Packgutes wird die Verpackung mit einer biologisch abbaubaren Dehnfolie aus einem Poly-ε-caprolacton-Stärke-Gemisch als Abdeckung überzogen.

### Beispiel 2:

Es werden geschäumte Polyvinylalkohol-Stärkederivat-Acetal-Tafeln analog wie in Beispiel 1 beschrieben hergestellt.

Vor dem Tiefziehvorgang wird jedoch noch eine 15 µm dicke Folie 2 aus einem Poly-ε-caprolacton-Stärke-Gemisch auf die Innenseite der Tasse warm aufkaschiert. Nach dem Tiefziehen wird eine Tasse 1 erhalten, die auf der Innenseite eine Barriereschicht gegenüber Wasser und Wasserdampf aufweist und welche für die Verpackung von Fertiggerichten geeignet ist.

Wird die Tasse 1 unmittelbar nach dem Gebrauch weggeworfen, so wird ihre Außenseite bereits von atmosphärischer Feuchtigkeit angelöst und löst sich unter der Einwirkung weiterer Feuchtigkeit gänzlich auf. Die Lösung dringt ins Erdreich ein und ist dort nach wenigen Tagen praktisch vollständig durch mikrobiellen Angriff abgebaut. Der Schutzfolienanteil wird durch das anhaftende PVAL-Stärkederivat-Acetal und dessen Klebrigkeit bei Feuchtigkeitseinwirkung am Boden festgehalten und dadurch ebenso raschem mikrobiellen Angriff bis zum vollständigen Abbau ausgesetzt.

### Beispiel 3:

Es werden geschäumte Polyvinylalkohol-Stärkederivat-Acetal-Tafeln analog zu in Beispiel 1 hergestellt.

Analog zu Beispiel 2 wird eine Barriere-Folie auf die Innenseite der Tasse 1 kaschiert.

Als Feuchtigkeits-Barriere-Folie wird ein 25 µm dicker Trägerfilm, hergestellt durch Blasextrusion aus demselben Polyvinylalkohol-Stärkederivat-Acetal, wie es für die Schaumextrusion für die Tasse 1 verwendet worden ist; jedoch wird dieses im ungeschäumten Zustand verwendet. Dieser Trägerfilm ist nach der Blasextrusion auf einer Seite zusätzlich mit einer 2 µm dicken Schicht eines für den Kontakt mit Lebensmitteln geeigneten Nitrolackes versehen und wird so vor dem Tiefziehprozeß auf die geschäumte Tafel laminiert, sodaß die Nitrolack-Schicht die Oberfläche bildet, welche für die Bildung der Tassen-Innenseite vorgesehen ist.

Danach werden die laminierten Tafeln wie in Beispiel 1 beschrieben tiefgezogen und die Tassen 1 ausgestanzt.

Die so hergestellten Tassen 1 sind zur Aufnahme von Fertiggerichten geeignet und sind nach bloßem Wegwerfen durch die Einwirkung von atmosphärischer Feuchtigkeit innerhalb von wenigen Tagen, bei Einwirkung von Regenfeuchtigkeit innerhalb von Minuten, abbaubar. Durch ihre besonders gute biologische Abbaubarkeit sind auch im Erdreich, in welches die gelösten Tassenreste eingedrungen sind, bereits nach wenigen Tagen keine nennenswerten Reste nachweisbar.

## Patentansprüche

1. Verwendung von biologisch abbaubaren, geschäumten Polymeren als Verpackungsmaterialien, dadurch gekennzeichnet, daß das verwendete Polymer ein wasserlösliches Vinylalkoholcopolymer ist, welches durch säurekatalysierte Acetalisierungsreaktion von Polyvinylalkohol mit einem Verseifungsgrad von 80 - 99,5 Mol% mit Stärke oder deren Derivaten herstellbar ist.

2. Verwendung nach Anspruch 1, dadurch gekennzeichnet, daß das verwendete Vinylalkoholcopolymer aus 50 - 95 Gewichtsteilen Polyvinylalkohol mit einem mittleren Polymerisationsgrad von 300 - 3000 (im Gewichtsmittel) herstellbar ist.

3. Verwendung nach Anspruch 1 oder 2, dadurch gekennzeichnet, daß das verwendete Vinylalkoholcopolymer aus 50 - 65 Gewichtsteilen Polyvinylalkohol herstellbar ist.

4. Verwendung nach einem der Ansprüche 1 - 3, dadurch gekennzeichnet, daß das verwendete Vinylalkoholcopolymer aus einem Polyvinylalkohol mit einem Polymerisationsgrad von 280 - 1500 (im Gewichtsmittel) aufweist.

5. Verwendung nach einem der Ansprüche 1 - 4, dadurch gekennzeichnet, daß in dem verwendeten Vinylalkoholcopolymer der eingesetzte Polyvinylalkohol einen Verseifungsgrad von 83 - 90 Mol% aufweist.

6. Verwendung nach einem der Ansprüche 1 - 5, dadurch gekennzeichnet, daß das verwendete Vinylalkoholcopolymer Stärkederivate enthält, welche durch sauren oder schwach oxidativen Abbau hergestellt sind.

7. Verwendung nach Anspruch 6, dadurch gekennzeichnet, daß an den Stärkederivaten im verwendeten Vinylalkoholcopolymer bis zu 20 % ihrer C₆-Einheiten äthoxyliert oder propoxyliert sind.

8. Verwendung nach einem der Ansprüche 1 - 7, dadurch gekennzeichnet, daß das verwendete Vinylalkoholcopolymer Zusatzstoffe enthält.

9. Verwendung nach Anspruch 8, dadurch gekennzeichnet, daß die Zusatzstoffe Plastifizierungsmittel, vorzugsweise Glyzerin, sind.

10. Verpackung bestehend aus einer Tasse und einem mit dieser verbundenen Abdeckelement, dadurch gekennzeichnet, daß die Tasse unter Verwendung eines biologisch abbaubaren, geschäumten Polymeren gemäß einem der Ansprüche 1 - 9 herstellbar ist.

11. Verpackung nach Anspruch 10, dadurch gekennzeichnet, daß das Abdeckelement ein Deckel oder eine Folie, vorzugsweise aus biologisch abbaubarem Material, ist.

12. Verpackung nach Anspruch 10 oder 11, dadurch gekennzeichnet, daß zum Verpacken von Packgütern mit Eigenfeuchte an der dem Packgut zugewandten Seite der Tasse eine wasserbeständige Barriereschicht vorliegt.

13. Verpackung nach Anspruch 12, dadurch gekennzeichnet, daß die wasserbeständige Barriereschicht eine Folie ist.

14. Verpackung nach Anspruch 12, dadurch gekennzeichnet, daß die wasserbeständige Barriereschicht aus einem hydrophoben Beschichtungssystem besteht.

15. Tasse als Transportunterlage für Speisen, dadurch gekennzeichnet, daß die Tasse unter Verwendung eines biologisch abbaubaren, geschäumten Polymeren gemäß einem der Ansprüche 1 - 9 herstellbar ist.

16. Tasse nach Anspruch 15, dadurch gekennzeichnet, daß zum Transport von Packgütern mit Eigenfeuchte an der dem Packgut zugewandten Seite der Tasse eine wasserbeständige Barriereschicht vorliegt.

17. Tasse nach Anspruch 16, dadurch gekennzeichnet, daß die wasserbeständige Barriereschicht eine Folie ist.

18. Tasse nach Anspruch 16, dadurch gekennzeichnet, daß die wasserbeständige Barriereschicht aus einem hydrophoben Beschichtungssystem besteht.
